(19) **Europäisches Patentamt / European Patent Office / Office européen des brevets**

(11) **EP 4 395 401 A1**

(12) **EUROPEAN PATENT APPLICATION**

(43) Date of publication:
   **03.07.2024  Bulletin 2024/27**

(21) Application number: **22383306.2**

(22) Date of filing: **28.12.2022**

(51) International Patent Classification (IPC):
   **H04W 24/02** (2009.01)

(52) Cooperative Patent Classification (CPC):
   **H04W 24/02**

(84) Designated Contracting States:
   **AL AT BE BG CH CY CZ DE DK EE ES FI FR GB GR HR HU IE IS IT LI LT LU LV MC ME MK MT NL NO PL PT RO RS SE SI SK SM TR**
   Designated Extension States:
   **BA**
   Designated Validation States:
   **KH MA MD TN**

(71) Applicant: **Telefonica Innovacion Digital SL**
   **28050 Madrid (ES)**

(72) Inventors:
   • **Suárez-Varela Maciá, José Rafael**
    **28013 Madrid (ES)**
   • **Solans Noguero, David**
    **28013 Madrid (ES)**
   • **Park, Souneil**
    **28013 Madrid (ES)**
   • **Arapakis, Ioannis**
    **28013 Madrid (ES)**

(74) Representative: **Carlos Hernando, Borja**
   **Garrigues IP, S.L.P.**
   **Hermosilla, 3**
   **28001 Madrid (ES)**

(54) **METHOD, SYSTEM, DEVICE AND COMPUTER PROGRAMS FOR EFFICIENT AND FAIR CONTROL OF A CELLULAR NETWORK**

(57)   A method, distributed system, device and computer programs for efficient and fair control of cellular networks are provided. The cellular network is distributed in different cells where each cell comprises a base transceiver station (BS) providing network coverage to a plurality of computing devices, each BS having associated thereto a computing agent. At least one computing agent comprises receiving signal strength information from at least one given computing device connected to its associated BS, user and device information of the given computing device, and cell information from its neighboring cells; and determining, a handover decision, that seeks to maximize a device-level quality of experience and to mitigate systematic assignation of fewer network resources to underprivileged demographic users, for said given computing device by executing a reinforced learning decision-making algorithm on an established trained policy and on the received signal strength, user and device and cell information.

FIG. 2

## Description

## Technical Field

The present invention relates to a method, system, device and computer programs for efficient and fair control of cellular networks.

## Background of the Invention

Fairness based on socio-demographic factors:

The literature on inequality has observed structural unfairness in the access to social capital or scarce resources, and its negative consequences to the society. For example, postcode and address information have been implicitly used in several decision processes, most apparently in determining motor insurance premiums [38], and in providing health services [39,40], bringing concerns of fairness to the forefront. Numerous studies have revealed unfairness in others areas: quality jobs, housing, education, public safety, access to health care, and wider social networks [1,2,3,4].

The literature on digital divide puts much emphasis on the topic. However, the studies primarily take the users' perspective [8], and assess the inequality in terms of technology access, skills, and benefits from the technology. The literature has explored digital divide depending on country, race, gender, and various sociodemographic factors [5,6,7].

While few works have explored the socioeconomic factors in mobile networks, the concept of geospatial fairness, that of telecom decision making at the edge which concerns maintaining seamless connectivity of mobile devices while on the move, remains to this day little explored. With general societal trends, COVID-19, and the broader context of the ever-expanding gig-economy moving large volumes of data traffic from office desktops to mobile devices, fair network and data access quality provisioning have assumed much higher significance than ever before. Higher awareness of the correlation between mobility patterns and residential locations of ethnic/class groups [41] raise apprehensions on whether algorithms could exacerbate biases against at-risk groups. On this topic, a recent work [9] has found associations of the factors with network performance measures. The performance measures were overall similar across the socioeconomic spectrum; however, the authors observed that among those who experience relatively higher delay, there were more people of the affluent classes whereas among those who experience relatively more frequent packet retransmission, there were more people of the deprived classes. This partly highlights the societal fragmentation and irreconcilable inequality that impact the overall quality of data connectivity experiences by users based on their mobile devices, configuration choices, mobility patterns, ethnic groups and social class. Therefore, present invention proposes a set of algorithms to enhance geo-spatial fairness in cellular network data access by developing Reinforcement Learning (RL)-based technologies that can materialize an impartial and multi-objective hand-off scheme.

Multi-Agent Deep Reinforcement Learning:

RL is a subclass of Machine Learning (ML) that can learn by maximizing rewards in some environment. Reinforcement Learning algorithms are useful when a problem involves making decisions or taking actions. More specifically, RL provides a mathematical formalism for learning-based control. By utilizing RL, near-optimal policies for optimizing reward functions that define what a computing agent should do, while the RL algorithm determines how to do it can be automatically learned. RL algorithms can, in principle, employ any statistical learning model, but the introduction of high-capacity function approximators - deep neural networks - into RL, along with effective algorithms for training them, has allowed RL methods to achieve excellent results in a wide range of domains, like game control [10, 11, 12, 13], robotics [14] and related fields [15, 16].

Traditional single-agent RL implementations often have limited application to complex real-world environments including heterogeneous elements (e.g., communication networks). Single-agent RL algorithms need to collect the state information in centralized entities, which often requires aggregating high-dimensional data from sensors distributed along the environment. This often introduces much latency in the decision-making process, which makes single-agent solutions impractical for time-critical tasks in complex large-scale environments (e.g., handover control in cellular networks).

Multi-agent RL (MARL) algorithms aim to tackle this limitation by providing solutions that can be deployed and executed in a distributed manner, thus endowing the system with better scalability properties [17]. In the networking context, it also enables the deployment of distributed agents on the edge, thus achieving faster control loops and avoiding single points of failure.

In MARL systems, the action space is defined as the joint of the individual action spaces of agents, which may have partial or full observations of the environment. Agents may control different element types (e.g., mobile devices, base stations), and can operate either *independently* - based on local reward functions -, or *cooperatively* - when they share common reward functions to pursue a global optimization goal.

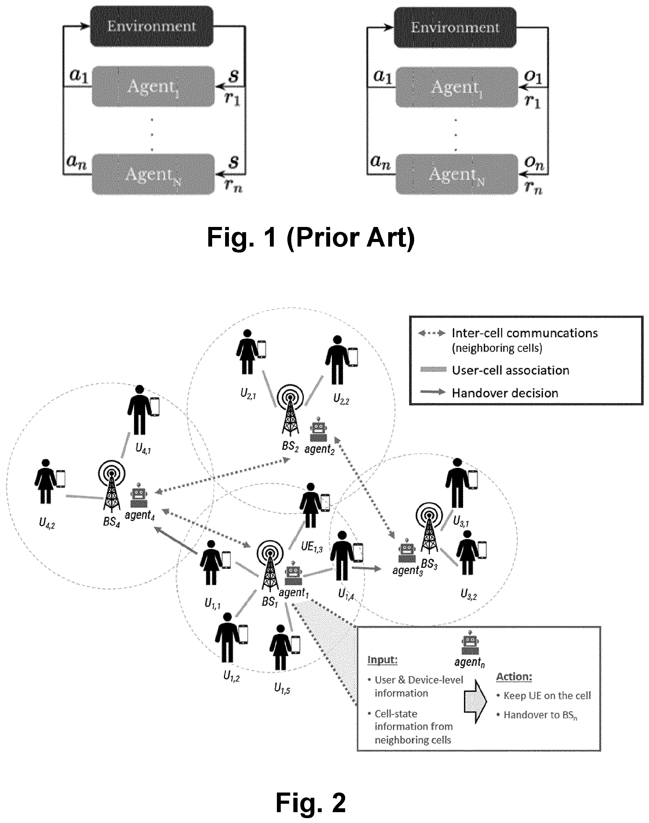

In cooperative MARL algorithms, agents seek to collaborate to optimize a global long-term reward. The environment is affected by the joint action of the agents, and agents receive a reward signal as a result of the collective operation of all the agents. In other words, the reward is no longer a function of the individual actions of the agent, but of the combined actions of all agents. Hence, maximizing the long-term reward requires considering the effect of other agents' actions. Fig. 1 illustrates two main mathematical frameworks considered by MARL Settings [18], both extended from the classic MDP formulation for single-agent RL algorithms.

Markov Games [19] extend the classical MDP formulation to consider the operation of multiple agents within the environment. It is the most straightforward extension of MDP to multi-agent settings. Each agent seeks to find the optimal policy that maximizes its long-term return, and all agents have full observation of the environment state. This usually requires a centralized entity that can collect all the state information and distribute it over all agents.

In most real-world problems agents have no access to all the state information of the environment, or it is very costly and time-consuming to acquire. For example, communication networks have been traditionally built on protocol stacks that rely on distributed control planes (i.e., distributed control capabilities on forwarding computing devices), and these elements jointly seek to optimize the overall network performance based on their local view. This has enabled the Internet to scale to a planetary size. In this context, Dec-POMDP [20] considers the problem of cooperative decision making under a partial observation of the environment. It is a generalization of the Partially Observable MDP (POMDP) formulation to the multi-agent setting. In Dec-POMDP, agents have only a partial view of the state (e.g., information from their nearest sensors in the environment), and they must make decisions under some uncertainty on the global state. Agents can either have a common reward (for fully-cooperative settings), or local rewards (for fully-competitive settings).

So far, a number of MARL algorithms applied to different automated control and decision-making problems have been developed. The most popular ones being QD-learning [21], MADQN [22], DDRQN [23], MADDPG [24], or PS-TRPO [25]. Nevertheless, the recent history of MARL algorithms has exposed the need for creating customized solutions tailored to specific problems.

In the context of the present invention, the open challenge of designing distributed multi-agent RL solutions that can efficiently operate in cellular network environments with heterogeneous computing devices, while seeking to achieve fairness across different socio-economic segments is addressed. This opens up several research challenges, such as designing distributed DRL-based algorithms with cooperation mechanisms than can effectively optimize fairness across users and devices.

User association optimization in cellular networks:

User association is a fundamental problem in cellular networks. As such, it has been vastly explored over the last decades [26]. Traditional game theory approaches have been explored to achieve fairness across computing devices connected to the network. For example, in [27] they formulate the user-cell association problem as a Nash Bargain scheme where base stations compete for users to connect to them. They seek to maximize the sum rate served to devices, considering that they can have minimum rate requirements. In [28] the authors follow a similar approach, but in this case, they consider two traffic types: H2H traffic as primary service, and M2M traffic as secondary service. Other works consider more complex scenarios emerging from novel network trends (e.g., Beyond 5G networks). For example, [29] tackles user association in massive MIMO heterogeneous networks. They formulate the problem as maximizing a function of the users' long-term average rates (per-user throughputs). For this, they consider a decentralized user-centric scheme that they formulate as a non-cooperative association game and show that its pure-strategy Nash equilibria must be close to the global optimum of the centralized problem. Likewise, in [30] the authors propose a heuristic-based solutions for joint optimization of user association and routing in the backhaul network. They seek to achieve fairness, and for this they formulate the problem as maximizing the minimum rate among all the users (MaxMin). More in detail, their solution is based on a combination of the Alternating Direction Method of Multipliers (ADMM) and the WMMSE algorithm.

In the arena of DRL-based solutions, a wide variety of proposals can also be found. For example, in [31] and [32] the authors propose a MARL framework respectively applied to user association, and handover optimization in cellular networks. In these works, agents are deployed on computing devices (or User Equipment (UE)), and their objective is to optimize the total network sum-rate. Agents act independently, they do not exchange any state information between them, and they make decisions based on their local observations. Other works consider the case of multi-objective optimization. For example, in [33] the authors propose ORLA, an online RL algorithm applied to user association in vehicular networks. Agents are deployed in cells, and they seek to maximize the users' service rate while minimizing the variance across users. Agents collect historical information of user associations in their own cells, but they do not exchange state information between them. In [34] the authors follow a similar approach for handover optimization in dense mmWave networks. They propose to distribute agents on UEs, and agents seek to jointly optimize cell-user associations and the beamforming configuration in MIMO antennas. [35] proposes a multi-agent DQN-based framework for user association and power control in heterogeneous networks. Agents are deployed on UEs, and they aim to optimize energy efficiency on UEs (i.e., ratio between throughput and power consumption). Likewise, [36] uses a multi-agent Proximal Policy Optimization (PPO) algorithm to maximize the overall throughput while reducing the handover frequency between cells. Agents are deployed on UEs, and they jointly optimize handovers and power allocation. Lastly, [37] proposes a novel method based on RL and Graph Attention Networks (GAT). In contrast to the previous works, here the authors propose a multi-agent system where agents are deployed in base stations and exchange information between them. Particularly, this system is applied to distributed slicing resource management in dense cellular networks.

At present, mobile network operators are facing multiple challenges in the orchestration of their resources. While satisfying the customers with high network performance is an obvious goal, the operators must consider the cost of deployment, and the management cost, energy consumption. In addition, the emerging socio-economic disparity adds the fairness objective to the list of considerations.

However, these multiple objectives often compete against each other; for example, satisfaction of users naturally requires more deployment and energy cost, and an emphasis on fairness could sacrifice the satisfaction of a certain group of users. While it is not trivial to come up with an ideal orchestration scheme for them, any scheme would have a significant impact on the users, business, and the environment as well.

Existing solutions consider mainly single-objective formulations, which inevitably assign higher importance to "mainstream" patterns, thus causing a steep utility gradient across various users and leading to significantly degraded utility for 'low-value' or 'outlier' users, within which at-risk groups may be highly represented. From a fairness vs utilitarianism point of view, they do not consider socio-demographic data to ensure equal treatment across users and mitigate a systematic assignation of fewer resources to underprivileged demographic groups. From a technological point of view, existing AI-based methods fail to address theoretical and algorithmic impasses, such as for example (i) a priori and uncertain decisions made about the desired trade-offs between objectives, *(ii)* not considering multiple objectives or collapsing the objectives to a single scalar reward, *(iii)* limited ability to discover multiple policies so as to rapidly adapt to changing preferences, *(iv)* solutions which fail to maximize the utility function(s) of interest.

Contrary to existing approaches, the proposed invention seeks to jointly optimize users' quality of service while offering fair resource allocation across socio-economic segments. To this end, it performs dynamic control of user-cell associations in the network.

**References**

[1] David M. Cutler and Edward L. Glaeser. 1997. Are Ghettos Good or Bad? The Quarterly Journal of Economics 112, 3 (1997), 827-872.

[2] Lauren J. Krivo and Ruth D. Peterson. 1996. Extremely Disadvantaged Neighborhoods and Urban Crime. Social Forces 75, 2 (1996), 619-648.

[3] Sean F. Reardon and Kendra Bischoff. 2011. Income Inequality and Income Segregation. Amer. J. Sociology 116, 4 (2011), 1092-1153.

[4] D. B. Smith, Z. Feng, M. L. Fennell, J. S. Zinn, and V. Mor. 2007. Separate and unequal: racial segregation and disparities in quality across U.S. nursing homes. Health Aff (Millwood) 26, 5 (2007), 1448-1458.

[5] Alina M Chircu and Vijay Mahajan. 2009. Perspective: Revisiting the digital divide: An analysis of mobile technology depth and service breadth in the BRIC countries. Journal of Product Innovation Management 26, 4 (2009), 455-466.

[6] John Clayton and Stephen J Macdonald. 2013. The limits of technology: Social class, occupation and digital inclusion in the city of Sunderland, England. Information, Communication & Society 16, 6 (2013), 945-966

[7] Linda A Jackson, Yong Zhao, Anthony Kolenic III, Hiram E Fitzgerald, Rena Harold, and Alexander Von Eye. 2008. Race, gender, and information technology use: The new digital divide. CyberPsychology & Behavior 11, 4 (2008), 437-442.

[8] Katy E Pearce and Ronald E Rice. 2013. Digital divides from access to activities: Comparing mobile and personal computer Internet users. Journal of communication 63, 4 (2013), 721-744.

[9] Park, Souneil, Pavol Mulinka, and Diego Perino. "A Large-scale Examination of" Socioeconomic" Fairness in Mobile Networks." In ACM SIGCAS/SIGCHI Conference on Computing and Sustainable Societies (COMPASS), pp. 248-256. 2022.

[10] Scott Fujimoto, David Meger, and Doina Precup. 2019. Off-policy deep reinforcement learning without exploration. In International Conference on Machine Learning. 2052-2062.

[11] Volodymyr Mnih, Koray Kavukcuoglu, David Silver, Andrei A Rusu, Joel Veness, Marc G Bellemare, Alex Graves, Martin Riedmiller, Andreas K Fidjeland, Georg Ostrovski, et al. 2015. Human-level control through deep reinforcement learning. Nature 518, 7540 (2015), 529.

[12] David Silver, Aja Huang, Chris J Maddison, Arthur Guez, Laurent Sifre, George Van Den Driessche, Julian Schrittwieser, Ioannis Antonoglou, Veda Panneershel- vam, Marc Lanctot, et al. 2016. Mastering the game of Go with deep neural networks and tree search. nature 529, 7587 (2016), 484.

[13] Aravind Srinivas, Michael Laskin, and Pieter Abbeel. 2020. Curl: Contrastive unsupervised representations for reinforcement learning. arXiv preprint arXiv:2004.04136 (2020).

[14] Jens Kober, J Andrew Bagnell, and Jan Peters. 2013. Reinforcement learning in robotics: A survey. The International Journal of Robotics Research 32, 11 (2013), 1238-1274.

[15] Xinshi Chen, Shuang Li, Hui Li, Shaohua Jiang, Yuan Qi, and Le Song. 2019. Generative Adversarial User Model for Reinforcement Learning Based Recommendation System. In International Conference on Machine Learning. 1052-1061.

[16] Yougang Lyu, Zihan Wang, Zhaochun Ren, Pengjie Ren, Zhumin Chen, Xiaozhong Liu, Yujun Li, Hongsong Li, and Hongye Song. 2022. Improving legal judgment prediction through reinforced criminal element extraction. Information Processing & Management 59, 1 (2022), 102780.

[17] Canese, Lorenzo, et al. "Multi-agent reinforcement learning: A review of challenges and applications." Applied Sciences 11.11 (2021): 4948.

[18] Feriani, Amal, and Ekram Hossain. "Single and multi-agent deep reinforcement learning for AI-enabled wireless networks: A tutorial." IEEE Communications Surveys & Tutorials 23.2 (2021): 1226-1252.

[19] M. L. Littman, "Markov games as a framework for multi-agent reinforcement learning," in Machine learning proceedings 1994, pp. 157-163, Elsevier, 1994.

[20] F. A. Oliehoek, C. Amato, et al., A concise introduction to decentralized POMDPs, vol. 1. Springer, 2016.

[21] Kar, S.; Moura, J.M.F.; Poor, H.V. QD-Learning: A Collaborative Distributed Strategy for Multi-Agent Reinforcement Learning Through Consensus + Innovations. IEEE Trans. Signal Process. 2013, 61, 1848-1862.

[22] Foerster, J.; Nardelli, N.; Farquhar, G.; Torr, P.; Kohli, P.; Whiteson, S. Stabilising Experience Replay for Deep Multi-Agent Reinforcement Learning. In Proceedings of the 34th International Conference on Machine Learning, Sydney, Australia, 6-11 August 2017.

[23] Foerster, J.N.; Assael, Y.M.; de Freitas, N.; Whiteson, S. Learning to Communicate to Solve Riddles with Deep Distributed Recurrent Q-Networks. arXiv 2016, arXiv:1602.02672.

[24] R. Lowe, Y. I. Wu, A. Tamar, J. Harb, O. P. Abbeel, and I. Mordatch, "Multi-agent actor-critic for mixed cooperative-competitive environments," in Advances in neural information processing systems, pp. 6379-6390, 2017.

[25] Gupta, J.K.; Egorov, M.; Kochenderfer, M. Cooperative Multi-agent Control Using Deep Reinforcement Learning. In Proceedings of the International Conference on Autonomous Agents and Multiagent Systems, São Paulo, Brazil, 8-12 May 2017; Volume 10642.

[26] Liu, Dantong, et al. "User association in 5G networks: A survey and an outlook." IEEE Communications Surveys & Tutorials 18.2 (2016): 1018-1044.

[27] Liu, Dantong, et al. "Nash bargaining solution based user association optimization in HetNets." 2014 IEEE 11th Consumer Communications and Networking Conference (CCNC), 2014.

[28] Liu, Dantong, et al. "Opportunistic user association for multi-service HetNets using Nash bargaining solution." IEEE Communications Letters 18.3 (2014): 463-466.

[29] Bethanabhotla, Dilip, et al. "Optimal user-cell association for massive MIMO wireless networks." IEEE Transactions on Wireless Communications 15.3 (2015): 1835-1850.

[30] Liao, Wei-Cheng, Mingyi Hong, and Zhi-Quan Luo. "Max-min network flow and resource allocation for backhaul constrained heterogeneous wireless networks." 2014 IEEE International Conference on Acoustics, Speech and Signal Processing (ICASSP), 2014.

[31] Sana, Mohamed, et al. "Multi-agent reinforcement learning for adaptive user association in dynamic mmWave networks." IEEE Transactions on Wireless Communications 19.10 (2020): 6520-6534.

[32] Sana, Mohamed, et al. "Multi-agent deep reinforcement learning for distributed handover management in dense mmWave networks." ICASSP 2020-2020 IEEE International Conference on Acoustics, Speech and Signal Processing (ICASSP), 2020.

[33] Li, Zhong, Cheng Wang, and Chang-Jun Jiang. "User association for load balancing in vehicular networks: An online reinforcement learning approach." IEEE Transactions on Intelligent Transportation Systems 18.8 (2017): 2217-2228.

[34] Dinh, Thi Ha Ly, et al. "Deep reinforcement learning-based user association in sub6ghz/mmwave integrated networks." 2021, IEEE CCNC.

[35] Ding, Hui, et al. "A deep reinforcement learning for user association and power control in heterogeneous networks." Ad Hoc Networks 102 (2020): 102069.

[36] Guo, Delin, et al. "Joint optimization of handover control and power allocation based on multi-agent deep reinforcement learning." IEEE Transactions on Vehicular Technology 69.11 (2020): 13124-13138.

[37] Shao, Yan, et al. "Graph attention network-based multi-agent reinforcement learning for slicing resource management in dense cellular network." IEEE Transactions on Vehicular Technology 70.10 (2021): 10792-10803.

[38] Harvey Jones, "When the wrong postcode puts insurance out of your reach", The Guardian, October 2016.

[39] https://www.spiked-online.com/2020/08/14/the-cruel-postcode-lottery-in-ivf/

[40] Coston et al. "Leveraging Administrative Data for Bias Audits: Assessing Disparate Coverage with Mobility Data for COVID- 19 Policy." FAccT 2021

[41] Mask, "The address book: What street addresses reveal about identity, race, wealth, and power." St. Martin's Press, 2020.

[42] S. S. Ravi, D. J. Rosenkrantz, and G. K. Tavyi. 1994. Heuristic and Special Case Algorithms for Dispersion Problems. Operations Research 42, 2 (1994), 299-310.
[43] C. Dwork, R. Kumar, M. Naor, and D. Sivakumar. 2001. Rank aggregation methods for the Web. In Proc. IW3C2 Intl. Conf. on World Wide Web. 613-622.

**Description of the Invention**

Present invention proposes, according to one aspect, a method for efficient and fair control of a cellular network, the cellular network being distributed in different cells where each cell comprises a base transceiver station providing network coverage to a plurality of computing devices of the cellular network, each computing device being associated to a user, the method comprising: associating a computing agent to each base transceiver station, each computing agent being able to communicate with computing agents of its neighboring cells; receiving, by a given computing agent, from at least one given computing device connected to its associated base transceiver station, signal strength information of the given computing device, the signal strength information being measured on the given computing device for the associated base transceiver station and for neighboring cells; receiving, by the given computing agent, user and device information of the given computing device, the user and device information including one or more of the following: user's socio-demographic indicators, an accumulated assignation cost of the user/device, historical resource usage statistics, computing device specifications; receiving, by the given computing agent, cell information from its neighboring cells, the cell information including one or more of the following: radio access technology of the cell, network resources available in the cell, cell traffic load, historical handover rate, aggregated quality indicators; and determining, by the given computing agent, a handover decision, that seeks to maximize a device-level quality of experience and to mitigate systematic assignation of fewer network resources to underprivileged demographic users, for said given computing device by means of executing a reinforced learning decision-making algorithm on an established learned/trained policy and on the received signal strength, user and device and cell information.

In some embodiments, if the handover decision determines that the given computing device is to be handover to a target base transceiver station, the method further comprises sending, by the given computing agent, a handover request to the target base transceiver station according to a cellular network protocol.

In some embodiments, the user's socio-demographic indicators include an IMD indicator and/or area of residence, the historical resource usage statistics comprises data consumption and/or average throughput, the computing device specifications comprise battery capacity, brand, model, CPU, type of network technology supported, and/or memory.

In some embodiments, the aggregated quality indicators comprise throughput, latency and/or packet loss.

In some embodiments, the given computing agent receives the cell information from its neighboring cells either at the same time or in a sequential manner.

In some embodiments, the trained policy is established by the given computing agent using historical records of handover activity in the cellular network and historical network resources usage of the given computing device.

In some embodiments, the learned/trained policy is established in an offline manner.

In some embodiments, the handover activity comprises a log of handover events including an identifier of the cell serving the handover, a target cell and the computing device that undergoes the handover.

In some embodiments, the reinforced learning decision-making algorithm assigns a different weight to the user and device information and to the cell information. Alternatively, in some embodiments, the reinforced learning decision-making algorithm assigns the same weight to the user and device information and to the cell information.

Present invention also proposes, according to another aspect, a distributed system for efficient and fair control of a cellular network. The system comprises a plurality of base transceiver stations, each base transceiver station being configured to provide coverage to a cell of the cellular network; a plurality of computing devices configured to connect to the plurality of base transceiver stations, each computing device being associated to a user; and a plurality of computing agents, each computing agent being configured to be associated to a base transceiver station and comprising a memory and one or more processing units to receive, from at least one given computing device connected to its associated base transceiver station, signal strength information of the given computing device, the signal strength information being measured on the given computing device for the associated cell and for neighboring cells; receive user and device information of the given computing device, the user and device information including one or more of the following: user's socio-demographic indicators, an accumulated assignation cost of the user/device, historical resource usage statistics, computing device specifications; receive cell information from its neighboring cells, the cell information including one or more of the following: radio access technology of the cell, network resources available in the cell, cell traffic load, historical handover rate, aggregated quality indicators; and determine a handover decision, that seeks to maximize a device-level quality of experience and to mitigate systematic assignation of fewer network resources to underprivileged demographic users, for said given computing device by means of executing a reinforced learning decision-making algorithm on an established learned/trained policy and on the received signal strength, user and device and cell information.

In yet another aspect present invention proposes a device for efficient and fair control of a cellular network, the device being associated to a given base transceiver station of a cellular network, which is distributed into different cells where each cell comprises a base transceiver station providing coverage to a plurality of computing devices, each one being associated to a user, the device comprising a memory and one or more processing units to receive, from at least one given computing device connected to its associated base transceiver station, signal strength information of the given computing device, the signal strength information being measured on the given computing device for the associated cell and for neighboring cells; receive user and device information of the given computing device, the user and device information including one or more of the following: user's socio-demographic indicators, an accumulated assignation cost of the user/device, historical resource usage statistics, computing device specifications; receive cell information from its neighboring cells, the cell information including one or more of the following: radio access technology of the cell, network resources available in the cell, cell traffic load, historical handover rate, aggregated quality indicators; and determine a handover decision, that seeks to maximize a device-level quality of experience and to mitigate systematic assignation of fewer network resources to underprivileged demographic users, for said given computing device by means of executing a reinforced learning decision-making algorithm on an established learned/trained policy and on the received signal strength, user and device and cell information.

In some embodiments, the device is configured to establish the trained policy by means of using historical records of handover activity in the cellular network and historical network resources usage of the given computing device.

In some embodiments, the device is configured to establish the trained policy while being offline.

Other embodiments of the invention that are disclosed herein also include software programs to perform the method embodiment steps and operations summarized above and disclosed in detail below. More particularly, a computer program product is one embodiment that has a computer-readable medium including computer program instructions encoded thereon that when executed on at least one processor in a computer system causes the processor to perform the operations indicated herein as embodiments of the invention.

Thus, present invention is an AI-based system for distributed optimization of user-cell associations with focus on fair resource allocation across all socioeconomic segments. Users have a certain set of socioeconomic-related factors associated with them, which can be approximated by some features such as their estimated area of residence, their computing device features, or their historical network resource usage. Based on this, distributed RL-based agents deployed on cells decide the cell each user/ computing device should be associated with. Particularly, cell-based agents have the capability to handoff computing devices to neighbouring cells based on their socioeconomic indicators, as well as considering state information from neighbouring cells (e.g., available resources, radio access technology).

With the present invention, users can experience better quality of service and have a more homogeneous experience independently of their socioeconomic level. For example, one objective could be that along the month all users experience similar usage time of high-performance cellular network communications (e.g., 4G, 5G), even if in their area of residence the access to these technologies is limited. This could be achieved - for example- by opportunistically prioritizing certain users when they have access to cells with more network resources.

## Brief Description of the Drawings

The previous and other advantages and features will be more fully understood from the following detailed description of embodiments, with reference to the attached figures, which must be considered in an illustrative and non-limiting manner, in which:

Fig. 1 illustrates classic multi-agent settings according to the prior art. Left - Markov Games; Right - Decentralized Partially Observable Markov Decision Process (Dec-POMDP).

Fig. 2 schematic representation of the proposed system, according to an embodiment.

Fig. 3 workflow of the proposed method from the perspective of a given computing agent, according to an embodiment of the present invention.

Fig. 4 illustrates a state transition before and after a handover is made in the network. The proposed invention leverages monitoring data to capture and store the evolution of the network state when a handover occurs, as well as user and device-level information. This data is then used to train computing agents offline.

## Detailed Description of the invention and of Preferred Embodiments

Present invention provides a new framework for addressing socioeconomic disparities and, in general, the digital divide observed in cellular network services. This translates to a series of requirements and network adjustments in relation to the end-users and their computing devices, such as mobile devices, the usage of mobile data, and radio antenna access.

The invention is motivated by Net Neutrality principles, as well as the fact that rapid urbanization and recent technological advances have precipitated new forms of inequalities. An important example among them is the disparity in mobile network access and quality of experience. Recent studies have highlighted the impact of socio-economic factors on mobile network resources (quality of end-user computing devices and access to base transceiver station), and the interplay of the factors with mobility and data usage patterns. The observations suggest that neglecting the factor in the management of mobile network environment may widen further the digital divide in urban areas. At the same time, Mobile Network Operators (MNOs) are facing multiple challenges in implementing an efficient control and management of their network resources. While satisfying the customers with high network performance is an obvious goal, the operators must consider other factors, such as the cost of deployment, the management cost, or the expected energy consumption. In addition, the socio-economic disparity mentioned above adds the fairness objective to the list of considerations.

Such objectives often compete against each other; for example, satisfaction of users naturally requires more deployment and energy cost, and an emphasis on fairness could sacrifice the quality of service (QoS) for a certain group of users. While it is not trivial to come up with an optimal resource allocation scheme for everyone, a good policy would have a significant impact on the users, business, and the environment as well. The invention is premised on a network resource allocation framework, which can effectively optimize multiple (and often competing) objectives, while not "losing sight" of what matters: reducing the gap among socioeconomic segments. To address the complexity of the space, a distributed data-driven solution for efficient and fair control of cellular networks is proposed, where base transceiver station can make resource allocation decisions based on the user traffic patterns observed. More specifically, user-cell association and resource allocation in cellular networks, while placing fairness considerations at the centre stage, is considered by means of a reinforcement learning decision-making paradigm that can address multiple desirable objectives (both related to service quality and fairness).

The proposed method is premised on Rawlsian and Post-Rawlsian Principles (RPMF) that embed the ethos of Rawlsian principles within Fair AI algorithms to derive a formalism of an optimal strategy for dealing with multi-objective and complex problems.

Quantification of inequalities:

Present invention formulates the problem of allocating resources to a given computing device (or simply device) D as a user-cell matching problem. In this respect, each user/device can be assigned a subset of the total available resources $r \subseteq R$, which depends on the cells that can serve the device at the specific moment and the quality of the communication that they can establish. The quality of service depends on multiple factors, such as the signal strength (e.g., RSRP, RSRQ), the radio access technology of the cells (e.g., 4G, 5G), or the communication requirements of the device D.

Each user-cell match implies an allocation of resources $r \subseteq$ [tier A, tier B, tier C..., tier Z]. With tier A corresponding to the resource allocation which would better cover the necessities of device D and tier Z corresponding to the less performant assignation between the set of available resources.

Given a time period $T_{\{N}$ - $T_{\{1}$, N matchings for each device D are calculated in a recurrent form.

Each matching implies a certain assignation cost $A_c$, which is the difference of performance the user would get if assigned with the most optimal set of resources compared to the allocated ones. This assignation cost can be calculated on the basis of a performance metric. E.g.: time; *How much extra time would the device require to execute successfully its task X if assigned with tier X instead of Tier A?"*

As an example, the assignation cost could consider some key performance metrics like the task execution time, battery power discharge, or CPU/memory utilization. For the purposes of this invention, it can be assumed that the assignation cost can be calculated and/or approximated with good-enough error bounds from the information available within the network.

The assignation cost could also consider some device-level features, e.g., the maximum amount of resources a device can consume due to its computing, memory and/or battery capacities. In this way, assigning resources above a certain device-specific threshold might not have positive impact on the assignation cost. To this end, device-specific thresholds can be approximated from a catalog of hardware specifications (e.g., device brand model, CPU, battery), and can be based on historical performance records from other users in the network. For example, based on the hardware specifications, multiple (predefined) rankings of the active devices in the network that define how can they leverage from a better connection can be derived.

However, since a-priori it is not known which hardware specifications are more informative for the proposed method and, therefore, several representative options should be considered. The reason is to avoid the common pitfall of resorting to a single specification that may not be representative or might steer our algorithm to the wrong direction. Since each hardware specification produces a different ranking of the active devices in the network, the optimal ranking through rank aggregation can be determined. This gives a super list which is as "close" as possible to all individual ordered lists simultaneously.

Prior to applying the rank aggregation algorithm, the hardware specifications set can be downsized to a subset that shows low consistency among the produced rankings. This is because (i) using all available hardware specifications can slow down rank aggregation and *(ii)* including highly correlated hardware specifications can bias the results and eventually affect their quality. To this end, the invention can compute all $\frac{n(n-1)}{2}$ pairwise Spearman correlations of the orderings. This gives a complete weighted graph G = (*V,E*): vertices are the validity measures and each edge e = ($v_i, v_i$) is weighted with the correlation value between $v_i$ and $v_j$. Given G, the *k* vertices are selected, such that the resulting k-clique has the minimum edge-weight. The minimum edge-weight clique problem is NP-Hard [42]. The invention can use a greedy approximation algorithm to select the hardware specifications with the lowest overall agreement.

Next, given the *k* hardware specifications with high consistency, the invention proceeds with identifying the active devices of interest (i.e., that were ranked higher or lower than the rest). This is a typical instance of multiple-winner voting problem, where a set of ordered preferences is given as input and the invention wants to select n winners. To this end, rank aggregation [43] can be applied, which has ties to other known techniques (e.g., Borda Count, Condorcet, etc.), but is better at filtering out nois. The invention can formalize the goal within the framework of the following optimization problem: Find a super list which would be as "close" as possible to all individual ordered lists simultaneously. The objective function that satisfies it is the following:

$$\Phi(\delta) = \sum_{i=1}^{m} w_i d(\delta, L_i)$$

where $\delta$ is a proposed ordered list of length $k = |L_i|$, $w_i$ is the importance weight associated with list $L_i$, $d$ is a distance function, and $L_i$ is the $i^{th}$ ordered list. The idea is to find $\delta^*$ which would minimize the total distance between $\delta^*$ and $L_i$'s:

$$\delta^* = arg\min \sum_{i=1}^{m} w_i d(\delta, L_i)$$

Here, the items of the lists are the active devices in the network and each ranked list $L_i$ corresponds to a hardware specification ranking. The rank aggregation can be performed using the Cross-Entropy Monte Carlo algorithm, an iterative procedure for solving difficult combinatorial problems that are not computationally feasible to find the solution directly, or Genetic Algorithms, in combination with a distance criterion, e.g. Kendall's tau or Spearman's Footrule distance.

A fair resource allocation policy would be the one that leads to equal assignation costs for all devices. Given that equalizing assignation costs for all existing devices in a certain time period can become a highly-complex problem, this invention addresses this problem from a group-based point of view, by aiming to equalize the assignation costs across demographic groups.

In the Algorithmic Fairness literature, the term *statistical parity* is used for referring to this concept. Achieving statistical parity ensures that different groups are treated similarly, leading devices to not be systematically assigned less resources because of their users pertaining to a certain demographic group. In order to do so, devices are assigned to individual -demographic groups. Satisfying statistical parity requires the average difference in assignation costs to be bounded by a certain value $\alpha$, which defines the maximum acceptable difference in average assignation cost between two groups.

Given two socio-demographic groups [$G_1$, $G_2$], statistical parity is achieved if:

$$\left| \frac{\sum_{i=0}^{n} A_C(G_1(i))}{n} - \frac{\sum_{j=0}^{m} A_C(G_2(j))}{m} \right| \leq \alpha$$

Where $A_C(G_N(X))$ identifies the assignation cost of user X in socio-demographic group N.

Information about the demographic group for each device can be approximated by using open data from the areas where owner's residences are located.

As an example of open data that can be used for those purposes, UK Index of Multiple Deprivation (IMD) at resolution of Lower-Layer Super Output areas (LSOAs). IMD values range from 0 to 9 (10 equal-size groups), ranging from the 10% most deprived areas to the 10% least deprived areas.

Operationalizing a Multi-objective Multi-agent Reinforcement Learning Framework for the Mitigation of inequalities:

With regard to Fig. 2, therein a high-level representation of the proposed system is shown. The present invention relies on a novel distributed multi-objective DRL-based framework for resource allocation in cellular networks. Particularly, the distributed cell-based computing agents of the proposed framework are intended to optimize handover decisions on devices, and they are jointly trained in a fully offline manner.

Each computing agent is deployed in a base transceiver station BS (i.e., in a cell) and it can communicate with neighboring computing agents to optimize the user-cell associations in their neighborhood. All computing agents can jointly account for complex multi-objective optimization policies that seek to maximize user-level quality of service, as well as fairness across users with certain socioeconomic indicators.

The main features of the proposed RL framework can be summarized as follows:

- Multi-objective: The proposed invention seeks to jointly optimize device-level performance indicators (e.g., throughput, latency) as well as achieve fairness across different socio-demographic groups. Computing gents may have access to user/device-level information, such as their historical use of the network, hardware specifications, or the quality of the signal they receive from neighboring cells. Also, they may have access to state information from neighboring cells (e.g., radio access technology, resources available). Based on these inputs, computing agents are tasked to cooperate to solve a complex multi-objective optimization problem that involves maximizing device-level quality of experience and at the same time mitigate systematic assignation of fewer resources to underprivileged demographic groups.

- Distributed optimization at the edge: a set of RL computing agents are deployed in a distributed manner on base transceiver stations (i.e., cells). Each computing agent makes handover decisions on user devices associated with the agent's cell - agents thus decide whether to keep the device associated with the current cell or perform a handover to a specific neighboring cell. The fact that it is a distributed system makes it inherently more scalable and fault-tolerant than logically centralized solutions, while at the same time it enables real-time operation at the edge - decisions are directly made on base transceiver stations with minimum latency. Additionally, by dropping the assumption that AI systems need to be trained and executed in a centralized manner and propose a lightweight approach that can be executed in a distributed manner, by building efficiently compact data and RL model summaries.

- Cooperative framework: Computing agents exchange state information with their neighbors to jointly cooperate and optimize the global optimization goals (i.e., performance and fairness). The information exchanged between agents may include, but is not limited to, traffic/users load on the cell, historical handover rate, aggregated KPIs (e.g., throughput, latency).

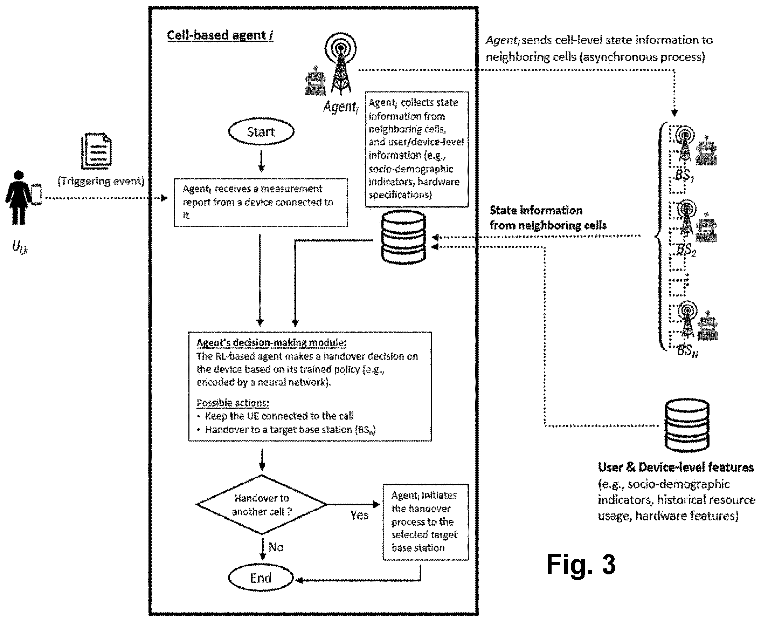

In a particular embodiment, the invention focuses on optimizing user-cell associations by making handover decisions on cells. Particularly, each cell-based computing agent takes the control of handover decisions on the cell where they are deployed. Fig. 3 depicts the workflow of the proposed method from the perspective of a generic computing agent. Note that all computing agents can run the same workflow in parallel in their own cells.

The execution pipeline starts when a given computing agent - deployed in a base transceiver station BS - receives a measurement report from a device associated with it. This measurement report contains signal strength information (e.g., RSRP, RSRQ, SINR) measured on the device for the associated cell and for neighboring cells. The computing agent can process the received information and use it as input to its decision-making module. This may help the computing agent infer information about the communication quality that neighboring cells can offer (e.g., throughput, latency).

The computing agent may additionally collect two different types of inputs: (i) user & device-level features, and (ii) state information from neighboring cells. Regarding the first block of features (user & device level), the information collected is specific to the device that sent the measurement report and the associated user (i.e., the subscriber associated with the device). This information may include, but is not limited to, user's socio-demographic indicators (e.g., IMD, area of residence), accumulated assignation cost $A_C$ of the user/device, historical resource usage statistics (e.g., data consumption, avg. throughput), and device-level hardware specifications (e.g., CPU, memory, battery capacity). Regarding the second block of inputs, the computing agent may receive from neighboring cells information such as the traffic/user load, historical handover rate, or aggregated cell-level KPIs (e.g., throughput, latency, packet loss). Note that computing agents can run asynchronously a process where they analyze and store state information received from other cells, as well as information from the users and devices associated with it. At this point of the workflow, the computing agent may take the most updated information stored in its database, and it uses this as an additional input to the decision-making module.

The computing agent executes its decision-making algorithm to make a handover decision based on the input information collected and its currently learned/trained policy. The decision can be either keeping the device associated with the same cell or performing a handover to a specific target base transceiver station. In case the decision-making algorithm decides to perform a handover to another base transceiver station BS, it sends a handover request to the target base transceiver station according to the cellular network protocol in place (e.g., 4G-LTE, 5G-NR).

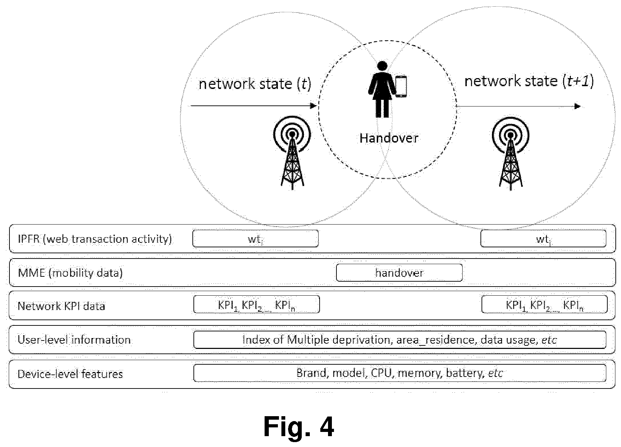

The proposed solution can be implemented in an offline training setting. Computing agents have access to historical records of handover activity in the network, as well as historical resources usage of subscribers (i.e., users). With this information, computing agents can populate an experience replay buffer and use it to (re)train their policy in an offline manner, without the need of testing random or under-trained policies in the network during the training process. Once the learned policy converges to a desired level of performance, computing agents can be updated and start to apply the new policy in the network. Fig. 4 illustrates the process of obtaining the required data for computing agents.

A monitoring platform can capture the handover events in the network (e.g., in the Mobility Management Entity in LTE-based networks). At the same time, session-level KPIs can be captured before and after the handover process (e.g., throughput, latency, loss). Moreover, present invention assumes that the cells have access to socio-demographic indicators of the user associated with the device (e.g., IMD, area of residence), as well as some device-level specifications (e.g., brand and model, CPU, memory). This information can be collected in a centralized manner (e.g., in the Home Subscriber Server in LTE networks) and efficiently distributed to the edge under demand.

With this information computing agents can compute the assignation cost $A_c$ during handover decisions, and this can be used as a reward function to agents.

The reward

$$\mathbb{R} : \mathcal{S} \times \mathcal{A} \longmapsto \mathbb{R}^m$$

is a vector-valued multi-objective function (each component corresponds to one objective), where $r(s,a)$ denotes the immediate reward by taking action $a$ at state $s$.

In some embodiments, the present invention follows a game theory approach for the multi-agent setting. This implies taking as reward both local (e.g., user-level performance, assignation cost) and global performance factors (network-level). For the multi-objective dimension, the proposed invention combines the utility functions of the individual objectives in place into a single reward function (e.g., weighted sum of the utility functions of KPIs and accumulated assignation cost Ac).

The can proposed method combine two different reward metrics (user-level and network-level) in a linear manner and collapse them into a single measure, which is used as the reward function for training the computing agents:

$$reward = w_1 \cdot r_{user} + w_2 \cdot r_{\text{network}}$$

Where "$w_1$" and "$w_2$" represent different weights that can be assigned to these metrics. To achieve effective cooperation between distributed agents in the network, the global-level metric $r_{network}$ combines aggregated cell-level performance measurements from the local and the neighboring cells. This forces neighboring computing agents to cooperate for optimizing a common goal. At the same time $r_{user}$ steers the agent's learning to optimize for statistical parity in resource assignation costs across socio-demographic groups, mitigating systematic inequalities in network resource allocation. Note that both metrics can be derived as linear combinations of multiple sub-features (e.g., throughput, latency assignation costs for $r_{user}$). Below there is a list with examples of data that computing agents can use for training:

- Cell-state information (local, and from neighboring): This may include data such as number of active users, traffic load, handovers rate.
- Handover events (e.g., collected from the MME): Log of handover events, including the identifier of the serving cell, the target cell, and the device that undergoes the handover.

- Session-level KPI data of devices before and after a handover (e.g., throughput, latency, content type).
- Subscriber information (e.g., collected from the HSS): area of residence, associated socio-demographic indicators (e.g., IMD), monthly data usage, access time to different network technologies (e.g., 4G, 5G).
- Device-level information: brand, model, hardware specification (e.g., CPU, memory, battery, 4G/5G support). This information can be enriched with open databases by searching the brand and model of the device.

Those skilled in the art will recognize that the present teachings are amenable to a variety of modifications and/or enhancements. For example, although the implementation of various components described herein may be embodied in a hardware device, it may also be implemented as a software only solution-e.g., an installation on an existing server. In addition, the invention may be implemented as a firmware, firmware/software combination, firmware/hardware combination, or a hardware/firmware/software combination.

The scope of the present invention is defined in the following set of claims.

## Claims

1. A method for efficient and fair control of a cellular network, the cellular network being distributed in different cells where each cell comprises a base transceiver station providing network coverage to a plurality of computing devices of the cellular network, each computing device being associated to a user, the method comprising:

associating a computing agent to each base transceiver station, each computing agent being able to communicate with computing agents of its neighboring cells;
receiving, by a given computing agent, from at least one given computing device connected to its associated base transceiver station, signal strength information of the given computing device, the signal strength information being measured on the given computing device for the associated base transceiver station and for neighboring cells;
receiving, by the given computing agent, user and device information of the given computing device, the user and device information including one or more of the following: user's socio-demographic indicators, an accumulated assignation cost of the user/device, historical resource usage statistics, computing device specifications;

receiving, by the given computing agent, cell information from its neighboring cells, the cell information including one or more of the following: radio access technology of the cell, network resources available in the cell, cell traffic load, historical handover rate, aggregated quality indicators; and

determining, by the given computing agent, a handover decision, that seeks to maximize a device-level quality of experience and to mitigate systematic assignation of fewer network resources to underprivileged demographic users, for said given computing device by means of executing a reinforced learning decision-making algorithm on an established trained policy and on the received signal strength, user and device and cell information.

2. The method of claim 1, wherein if the handover decision determines that the given computing device is to be handover to a target base transceiver station, the method further comprising sending, by the given computing agent, a handover request to the target base transceiver station according to a cellular network protocol.

3. The method of any one of the previous claims, wherein the user's socio-demographic indicators include an IMD indicator and/or area of residence, the historical resource usage statistics comprises data consumption and/or average throughput, the computing device specifications comprise battery capacity, brand, model, CPU, type of network technology supported, and/or memory.

4. The method of any one of the previous claims, wherein the aggregated quality indicators comprise throughput, latency and/or packet loss.

5. The method of any one of the previous claims, wherein the given computing agent receives the cell information from its neighboring cells either at the same time or in a sequential manner.

6. The method of any one of the previous claims, wherein the trained policy is established by the given computing agent using historical records of handover activity in the cellular network and historical network resources usage of the given computing device.

7. The method of claim 6, wherein the trained policy being established in an offline manner.

8. The method of claim 6 or 7, wherein the handover activity comprises a log of handover events including an identifier of the cell serving the handover, a target cell and the computing device that undergoes the handover.

9. The method of any one of the previous claims, wherein the reinforced learning decision-making algorithm assigns a different weight to the user and device information and to the cell information.

10. The method of any one of the previous claims 1-7, wherein the reinforced learning decision-making algorithm assigns a same weight to the user and device information and to the cell information.

11. A distributed system for efficient and fair control of a cellular network, comprising:

a plurality of base transceiver stations, each base transceiver station being configured to provide coverage to a cell of the cellular network;
a plurality of computing devices configured to connect to the plurality of base transceiver stations, each computing device being associated to a user; and
a plurality of computing agents, each computing agent being configured to be associated to a base transceiver station and comprising a memory and one or more processing units to:

receive, from at least one given computing device connected to its associated base transceiver station, signal strength information of the given computing device, the signal strength information being measured on the given computing device for the associated cell and for neighboring cells;
receive user and device information of the given computing device, the user and device information including one or more of the following: user's socio-demographic indicators, an accumulated assignation cost of the user/device, historical resource usage statistics, computing device specifications;
receive cell information from its neighboring cells, the cell information including one or more of the following: radio access technology of the cell, network resources available in the cell, cell traffic load, historical handover rate, aggregated quality indicators; and
determine a handover decision, that seeks to maximize a device-level quality of experience and to mitigate systematic assignation of fewer network resources to underprivileged demographic users, for said given computing device by means of executing a reinforced learning decision-making algorithm on an established trained policy and on the received signal strength, user and device and cell information.

**12.** A device for efficient and fair control of a cellular network, the device being associated to a given base transceiver station of a cellular network, which is distributed into different cells where each cell comprises a base transceiver station providing coverage to a plurality of computing devices, each one being associated to a user, the device comprising a memory and one or more processing units to:

receive, from at least one given computing device connected to its associated base transceiver station, signal strength information of the given computing device, the signal strength information being measured on the given computing device for the associated cell and for neighboring cells;

receive user and device information of the given computing device, the user and device information including one or more of the following: user's socio-demographic indicators, an accumulated assignation cost of the user/device, historical resource usage statistics, computing device specifications;

receive cell information from its neighboring cells, the cell information including one or more of the following: radio access technology of the cell, network resources available in the cell, cell traffic load, historical handover rate, aggregated quality indicators; and

determine a handover decision, that seeks to maximize a device-level quality of experience and to mitigate systematic assignation of fewer network resources to underprivileged demographic users, for said given computing device by means of executing a reinforced learning decision-making algorithm on an established trained policy and on the received signal strength, user and device and cell information.

**13.** The device of claim 12, wherein the device is configured to establish the trained policy by means of using historical records of handover activity in the cellular network and historical network resources usage of the given computing device.

**14.** The device of claim 12 or 13, wherein it is configured to establish the trained policy while being offline.

**15.** A non-transitory computer readable medium comprising code instructions that when executed by a computing device implement the method of any of claims 1 to 10.

# Fig. 1 (Prior Art)

Inter-cell communcations
(neighboring cells)

User-cell association

Handover decision

Input:

agent$_n$

- User & Device-level
  information

- Cell-state
  information from
  neighboring cells

Action:

- Keep UE on the cell

- Handover to BS$_n$

# Fig. 2

**Cell-based agent *i***

*Agent$_i$* sends cell-level state information to neighboring cells (asynchronous process)

Start

(Triggering event)

$U_{i,k}$

Agent$_i$ receives a measurement report from a device connected to it

*Agent$_i$*

Agent$_i$ collects state information from neighboring cells, and user/device-level information (e.g., socio-demographic indicators, hardware specifications)

**State information from neighboring cells**

$BS_1$

$BS_2$

$BS_N$

**Agent's decision-making module:**
The RL-based agent makes a handover decision on the device based on its trained policy (e.g., encoded by a neural network).

Possible actions:
- Keep the UE connected to the call
- Handover to a target base station (BS$_n$)

Handover to another cell ?

Yes — Agent$_i$ initiates the handover process to the selected target base station

No

End

**User & Device-level features**
(e.g., socio-demographic indicators, historical resource usage, hardware features)

# Fig. 3

EP 4 395 401 A1

15

| | | |
|---|---|---|
| IPFR (web transaction activity) | $wt_i$ | $wt_i$ |
| MME (mobility data) | handover | |
| Network KPI data | $KPI_1, KPI_2, ..., KPI_n$ | $KPI_1, KPI_2, ..., KPI_n$ |
| User-level information | Index of Multiple deprivation, area_residence, data usage, *etc* | |
| Device-level features | Brand, model, CPU, memory, battery, *etc* | |

network state (*t*)    Handover    network state (*t+1*)

# Fig. 4

Europäisches
Patentamt

European
Patent Office

Office européen
des brevets

# EUROPEAN SEARCH REPORT

Application Number

EP 22 38 3306

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2022/123292 A1 (ERICSSON TELEFON AB L M [SE]) 16 June 2022 (2022-06-16) | 1-7,9-15 | INV. H04W24/02 |
| A | * paragraph [0043] - paragraph [0052]; figures 1, 4, 5 * <br> * paragraphs [0033], [0079], [0090], [0091], [0095] * <br> * paragraph [0064] - paragraph [0071] * | 8 | |
| Y | MOLLEL MICHAEL S. ET AL: "Deep Reinforcement Learning based Handover Management for Millimeter Wave Communication", INTERNATIONAL JOURNAL OF ADVANCED COMPUTER SCIENCE AND APPLICATIONS, vol. 12, no. 2, 1 January 2021 (2021-01-01), XP093052134, ISSN: 2158-107X, DOI: 10.14569/IJACSA.2021.0120298 | 1-7,9-15 | |
| A | * page 786 - page 788 * | 8 | |
| Y | ANDREA LACAVA ET AL: "Programmable and Customized Intelligence for Traffic Steering in 5G Networks Using Open RAN Architectures", ARXIV.ORG, CORNELL UNIVERSITY LIBRARY, 201 OLIN LIBRARY CORNELL UNIVERSITY ITHACA, NY 14853, 6 October 2022 (2022-10-06), XP091335288, | 1-7,9-15 | TECHNICAL FIELDS SEARCHED (IPC) H04W |
| A | * page 7 * | 8 | |
| Y | CN 109 495 935 B (RES INST CHINA MOBILE COMMUNICATIONS CORP; CHINA MOBILE COMM CORP) 20 April 2021 (2021-04-20) | 1-7,9-15 | |
| A | * paragraph [0202] * | 8 | |

The present search report has been drawn up for all claims

| Place of search | Date of completion of the search | Examiner |
|---|---|---|
| Munich | 7 June 2023 | Tessier, Serge |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 38 3306

This annex lists the patent family members relating to the patent documents cited in the above-mentioned European search report.
The members are as contained in the European Patent Office EDP file on
The European Patent Office is in no way liable for these particulars which are merely given for the purpose of information.

07-06-2023

| Patent document cited in search report | Publication date | Patent family member(s) | Publication date |
|---|---|---|---|
| WO 2022123292 A1 | 16-06-2022 | NONE | |
| CN 109495935 B | 20-04-2021 | NONE | |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **DAVID M. CUTLER ; EDWARD L. GLAESER.** Are Ghettos Good or Bad?. *The Quarterly Journal of Economics,* 1997, vol. 112 (3), 827-872
- **LAUREN J. KRIVO ; RUTH D. PETERSON.** Extremely Disadvantaged Neighborhoods and Urban Crime. *Social Forces,* 1996, vol. 75 (2), 619-648
- **SEAN F. REARDON ; KENDRA BISCHOFF.** Income Inequality and Income Segregation. *Amer. J. Sociology,* 2011, vol. 116 (4), 1092-1153
- **D. B. SMITH ; Z. FENG ; M. L. FENNELL ; J. S. ZINN ; V. MOR.** Separate and unequal: racial segregation and disparities in quality across U.S. nursing homes. *Health Aff (Millwood),* 2007, vol. 26 (5), 1448-1458
- **ALINA M CHIRCU ; VIJAY MAHAJAN.** Perspective: Revisiting the digital divide: An analysis of mobile technology depth and service breadth in the BRIC countries. *Journal of Product Innovation Management,* 2009, vol. 26 (4), 455-466
- **JOHN CLAYTON ; STEPHEN J MACDONALD.** The limits of technology: Social class, occupation and digital inclusion in the city of Sunderland, England. *Information, Communication & Society,* 2013, vol. 16 (6), 945-966
- **LINDA A JACKSON ; YONG ZHAO ; ANTHONY KOLENIC III ; HIRAM E FITZGERALD ; RENA HAROLD ; ALEXANDER VON EYE.** Race, gender, and information technology use: The new digital divide. *CyberPsychology & Behavior,* 2008, vol. 11 (4), 437-442
- **KATY E PEARCE ; RONALD E RICE.** Digital divides from access to activities: Comparing mobile and personal computer Internet users. *Journal of communication,* 2013, vol. 63 (4), 721-744
- **PARK, SOUNEIL ; PAVOL MULINKA ; DIEGO PERINO.** A Large-scale Examination of" Socioeconomic" Fairness in Mobile Networks. *ACM SIGCAS/SIGCHI Conference on Computing and Sustainable Societies (COMPASS),* 2022, 248-256
- **SCOTT FUJIMOTO ; DAVID MEGER ; DOINA PRECUP.** Off-policy deep reinforcement learning without exploration. *International Conference on Machine Learning,* 2019, 2052-2062

- **VOLODYMYR MNIH ; KORAY KAVUKCUOGLU ; DAVID SILVER ; ANDREI A RUSU ; JOEL VENESS ; MARC G BELLEMARE ; ALEX GRAVES ; MARTIN RIEDMILLER ; ANDREAS K FIDJELAND ; GEORG OSTROVSKI et al.** Human-level control through deep reinforcement learning. *Nature,* 2015, vol. 518 (7540), 529
- **DAVID SILVER ; AJA HUANG ; CHRIS J MADDISON ; ARTHUR GUEZ ; LAURENT SIFRE ; GEORGE VAN DEN DRIESSCHE ; JULIAN SCHRITTWIESER ; LOANNIS ANTONOGLOU ; VEDA PANNEERSHEL- VAM ; MARC LANCTOT et al.** Mastering the game of Go with deep neural networks and tree search. *nature,* 2016, vol. 529 (7587), 484
- **ARAVIND SRINIVAS ; MICHAEL LASKIN ; PIETER ABBEEL.** Curl: Contrastive unsupervised representations for reinforcement learning. *arXiv:2004.04136,* 2020
- **JENS KOBER ; J ANDREW BAGNELL ; JAN PETERS.** Reinforcement learning in robotics: A survey. *The International Journal of Robotics Research,* 2013, vol. 32 (11), 1238-1274
- **XINSHI CHEN ; SHUANG LI ; HUI LI ; SHAOHUA JIANG ; YUAN QI ; LE SONG.** Generative Adversarial User Model for Reinforcement Learning Based Recommendation System. *International Conference on Machine Learning,* 2019, 1052-1061
- **YOUGANG LYU ; ZIHAN WANG ; ZHAOCHUN REN ; PENGJIE REN ; ZHUMIN CHEN ; XIAOZHONG LIU ; YUJUN LI ; HONGSONG LI ; HONGYE SONG.** Improving legal judgment prediction through reinforced criminal element extraction. *Information Processing & Management,* 2022, vol. 59 (1), 102780
- **CANESE, LORENZO et al.** Multi-agent reinforcement learning: A review of challenges and applications. *Applied Sciences,* 2021, vol. 11 (11), 4948
- **FERIANI, AMAL ; EKRAM HOSSAIN.** Single and multi-agent deep reinforcement learning for AI-enabled wireless networks: A tutorial. *IEEE Communications Surveys & Tutorials,* 2021, vol. 23 (2), 1226-1252
- Markov games as a framework for multi-agent reinforcement learning. **M. L. LITTMAN.** Machine learning proceedings. Elsevier, 1994, 157-163

- **F. A. OLIEHOEK ; C. AMATO et al.** A concise introduction to decentralized POMDPs. Springer, 2016, vol. 1
- **KAR, S. ; MOURA, J.M.F. ; POOR, H.V.** QD-Learning: A Collaborative Distributed Strategy for Multi-Agent Reinforcement Learning Through Consensus + Innovations. *IEEE Trans. Signal Process.,* 2013, vol. 61, 1848-1862
- **FOERSTER, J. ; NARDELLI, N. ; FARQUHAR, G. ; TORR, P. ; KOHLI, P. ; WHITESON, S.** Stabilising Experience Replay for Deep Multi-Agent Reinforcement Learning. *Proceedings of the 34th International Conference on Machine Learning, Sydney, Australia,* 06 August 2017
- **FOERSTER, J.N. ; ASSAEL, Y.M. ; DE FREITAS, N. ; WHITESON, S.** Learning to Communicate to Solve Riddles with Deep Distributed Recurrent Q-Networks. *arXiv:1602.02672,* 2016
- **R. LOWE ; Y. I. WU ; A. TAMAR ; J. HARB ; O. P. ABBEEL ; I. MORDATCH.** Multi-agent actor-critic for mixed cooperative-competitive environments. *Advances in neural information processing systems,* 2017, 6379-6390
- **GUPTA, J.K. ; EGOROV, M. ; KOCHENDERFER, M.** Cooperative Multi-agent Control Using Deep Reinforcement Learning. *Proceedings of the International Conference on Autonomous Agents and Multiagent Systems, São Paulo, Brazil,* 08 May 2017, vol. 10642
- **LIU, DANTONG et al.** User association in 5G networks: A survey and an outlook. *IEEE Communications Surveys & Tutorials,* 2016, vol. 18 (2), 1018-1044
- **LIU, DANTONG et al.** Nash bargaining solution based user association optimization in HetNets. *2014 IEEE 11th Consumer Communications and Networking Conference (CCNC),* 2014
- **LIU, DANTONG et al.** Opportunistic user association for multi-service HetNets using Nash bargaining solution. *IEEE Communications Letters,* 2014, vol. 18 (3), 463-466
- **BETHANABHOTLA, DILIP et al.** Optimal user-cell association for massive MIMO wireless networks. *IEEE Transactions on Wireless Communications,* 2015, vol. 15 (3), 1835-1850
- **LIAO, WEI-CHENG ; MINGYI HONG ; ZHI-QUAN LUO.** Max-min network flow and resource allocation for backhaul constrained heterogeneous wireless networks. *2014 IEEE International Conference on Acoustics, Speech and Signal Processing (ICASSP),* 2014
- **SANA, MOHAMED et al.** Multi-agent reinforcement learning for adaptive user association in dynamic mmWave networks. *IEEE Transactions on Wireless Communications,* 2020, vol. 19 (10), 6520-6534
- **SANA, MOHAMED et al.** Multi-agent deep reinforcement learning for distributed handover management in dense mmWave networks. *ICASSP 2020-2020 IEEE International Conference on Acoustics, Speech and Signal Processing (ICASSP),* 2020
- **LI, ZHONG ; CHENG WANG ; CHANG-JUN JIANG.** User association for load balancing in vehicular networks: An online reinforcement learning approach. *IEEE Transactions on Intelligent Transportation Systems,* 2017, vol. 18 (8), 2217-2228
- **DINH, THI HA LY et al.** Deep reinforcement learning-based user association in sub6ghz/mmwave integrated networks. *IEEE CCNC,* 2021
- **DING, HUI et al.** A deep reinforcement learning for user association and power control in heterogeneous networks. *Ad Hoc Networks,* 2020, vol. 102, 102069
- **GUO, DELIN et al.** Joint optimization of handover control and power allocation based on multi-agent deep reinforcement learning. *IEEE Transactions on Vehicular Technology,* 2020, vol. 69 (11), 13124-13138
- **SHAO, YAN et al.** Graph attention network-based multi-agent reinforcement learning for slicing resource management in dense cellular network. *IEEE Transactions on Vehicular Technology,* 2021, vol. 70 (10), 10792-10803
- **HARVEY JONES.** When the wrong postcode puts insurance out of your reach. *The Guardian,* October 2016
- **COSTON et al.** Leveraging Administrative Data for Bias Audits: Assessing Disparate Coverage with Mobility Data for COVID- 19 Policy. *FAccT,* 2021
- **MASK.** The address book: What street addresses reveal about identity, race, wealth, and power. St. Martin's Press, 2020
- **S. S. RAVI ; D. J. ROSENKRANTZ ; G. K. TAVYI.** Heuristic and Special Case Algorithms for Dispersion Problems. *Operations Research,* 1994, vol. 42 (2), 299-310
- **C. DWORK ; R. KUMAR ; M. NAOR ; D. SIVAKUMAR.** Rank aggregation methods for the Web. *Proc. IW3C2 Intl. Conf. on World Wide Web,* 2001, 613-622